# EUROPEAN PATENT SPECIFICATION

(11) **EP 2 668 841 B1**
(45) Date of publication and mention of the grant of the patent: **22.06.2016**
(21) Application number: 12195336.8
(22) Date of filing: 03.12.2012
(51) Int. Cl.: A01G 9/02, A01G 9/04

(54) **PLANT POT AND CARRIER ASSEMBLY**
EINRICHTUNG MIT PFLANZENTOPF UND TRAGBEHÄLTER
ASSEMBLAGE DE POT POUR PLANTE ET SUPPORT

(30) Priority: 01.06.2012 NL 2008923; 01.06.2012 EP 12170611
(43) Date of publication of application: 04.12.2013
(73) Proprietor: Patentstar BV, 2771 NM Boskoop (NL)
(72) Inventor: van der Starre, Bart, 2771 NM Boskoop (NL)
(74) Representative: De Vries & Metman

(56) References cited:
- WO-A1-99/60841
- CA-A1- 2 544 184
- US-A1- 2011 056 131
- US-A1- 2012 066 970

## Description

### TECHNICAL FIELD

The present invention relates to a plant pot assembly. The assembly comprises a pot and a carrier. The underside of the pot is provided with one or more positioning structures for cooperation with a suitable carrier. The invention further relates to a pot and a carrier for such an assembly.

### BACKGROUND

Such assemblies are known for production, transport and displaying plants. In such case the carrier can be used to determine an arrangement of the pots. E.g., see US 2011/0056131, US 2012/0066970 or CA 2 544 184 disclosing assemblies according to the preamble of independent claim 1.

WO 2004/095905 discloses, e.g., plant pots and a multicomponent tray. The pots and tray have a self-orienting configuration for urging the pots into proper alignment when same are placed within compartments of the tray. The pots include angled holes disposed radially about the bottom portion of the pots. The compartments of the tray include angled protrusions disposed radially about the bottom portion of the compartment. The angled holes of the pot engage with the angled protrusions of the compartment when the pot is placed in the compartment to urge the pot into proper alignment. A plurality of slots are included along an upper portion of each pot for allowing optional identification tags to be inserted thereinto. The identification tags, in addition to logos, artwork, or other indicia, if included, are positioned by the self orienting configuration of the pots and tray to face in a desired direction.

Such pots and trays can provide a uniform presentation but the assembly has the drawback that relatively complex moulds are needed and much material is used. Moreover, the pot and tray are relatively fragile because of sharp corners and they prove not to work well, in particular when dirt and/or other contaminants has (have) entered between the pot and the tray, wherein amongst others the pots remain standing relatively high, uneven and unstable in the tray.

Further, US 5,022,183 is known which provides a tray for retaining a flower pot having a pot bottom with drain holes. The tray has a planar bottom wall for supporting the pot bottom and restrains the pot from moving parallel to the plane of the tray bottom wall. A protrusion is formed in the tray bottom wall in registration with a pot drain hole. The protrusion has a transverse lip adapted to overlie the pot bottom and restrains transverse movement relative to the plane of the tray bottom wall.

JP 11-285315 further provides a plant pot having crossing grooves in the bottom to be attached to a crossing of rod-shaped carriers.

Such assemblies according to US 5,022,183 and JP 11-285315 complicate placement of the pots in and on, respectively, the carrier and prevent in particular removal and putting back the pots from the carrier which renders the assemblies unsuited for sale displays.

Thus there is a desire for an improved assembly.

### SUMMARY

To that end, an assembly according to the appended claims is provided.

Since the pot and the carrier are provided with cooperating first and second positioning structures to, in assembled state, define a single relative orientation of the pot and carrier, a shape-lock is provided that breaks rotational symmetry and placement of the pot on the carrier is uniquely defined. In such manner a desired presentation of the assembly may easily be guaranteed.

If the carrier comprises a plurality of positioning structures to define in plural relative positions a single relative orientation of the pot and the carrier, a same presentation can be achieved in different positions of the pot relative to the carrier.

In particular the assembly comprises a plurality of pots, preferably substantially identical pots, wherein, in assembled state of the carrier and pots, the positioning structures define the same relative orientation of the respective pot and the carrier.

In an embodiment the pot is substantially round shaped and it may have a cylindrical or (truncated) conical shape. Such a shape is customary and beneficial during (automated) growing and logistics and it is generally considered attractive. A (sales-) display with substantially identical round pots as expounded herein can efficiently have a uniform and therewith pleasingly well-organized and consumer interest exciting appearance.

In another embodiment each pot has a top side, wherein the top side has an non-circular shape in top view. The bottom side can then have a substantially round shape in cross section. The non-circular shape may e.g. be substantially oval or drop-shaped, but also substantially rectangular or triangular. Due to the non-circular shape of the pot the uniformity of the display is stressed and the consumer interest exciting potential of the display is increased. By a round bottom side an, at least apparently, slender shape may be provided and the uniformity of the presentation of the top sides may be stressed extra. An oval or drop-shaped top side provides an organic non-circular shape with a pleasing appearance, which readily appears larger than it is.

Due to the fixed relative orientation labels, support elements and/or decorations, etc., may be easily arranged in equal positions in a display. Namely, it has been found that the presentation of plant pots in a display has a pronounced effect on the interest and willingness to buy of potential consumers, wherein a uniform presentation clearly increases the consumer interest exciting potential of the display. In a display wherein the pot or pots is or are provided with a plant placed in the pot, possibly in a growing medium, this is in particular the case because since due to the natural diversity of the plants already a somewhat inquiet display is provided.

In a uniform presentation of pots provided with plants the focus of the display may lie more on the plants themselves, which thereby can also appear larger and more attractive. Further, when arranging the plant in the pot an attractive presentation of the plant when the pot is placed on the carrier may be taken into account.

By the cooperating positioning structures it is also ensured that a pot that possibly is removed from the carrier is not placed back in another orientation, e.g. during refilling of a display or by customers. Thus supervision of the display may also be reduced.

Preferably the first and second positioning structures extend substantially in a vertical direction in normal use, that is, upward for the pot and vertical for the carrier which otherwise extends substantially horizontal. According to the invention the first positioning structure comprises one or more holes with a non-circular shape, and the second positioning structure comprises one or more protrusions to be received at least partly in the hole(s). According to the invention, the bottom of the pot is provided with the hole(s), typically in the shape of a cavity, and the carrier is provided with one or more protrusions.

A substantially vertical orientation of the positioning structures simplifies use by simply placing the pot on the carrier. This also facilitates keeping pots accessible in a close arrangement. A hole in the bottom of the pot can readily maintain stability of the pot. Further, the one or more holes in the bottom of the pot are provided such that they are at least substantially invisible when the pot is placed on a flat surface without use of the carrier, in particular when the hole is provided as a local cavity or depression at or near the centre of the bottom. Thus, the pot can be provided as decorative pot. A cavity in the bottom of the pot can be used to increase an apparent volume of the pot relative to the actual volume to provide, by which in a relatively large pot with relatively little soil or other growing medium a relatively high filling height may be provided.

The one or more holes and/or the one or more protrusions may be formed at least partly conic with upwardly decreasing size, so that a self-seeking effect can be achieved which simplifies placement and use. This may further facilitate manufacturing and/or stacking of a number of pots and/or carriers, e.g. by a clearing effect from a mould in a product that is cast or manufactured by deformation of a flat(-ter) initial material.

Placement of the pot on the carrier in the desired orientation is further ensured in case the one or more holes and one or more protrusions are formed such that a protrusion can only be inserted into a hole only in substantially the single defined relative orientation of the pot and the carrier. E.g. the protrusion has a non-circular shape in cross section and a corresponding hole has a matching non-circular shaped entrance opening. Also in such case the first and second positioning structures can be formed such that in substantially the defined single relative orientation an easy-entry portion is provided, e.g. due to an upwardly size decreasing conic portion, so that a self-seeking effect is provided.

A relatively strong construction is provided when the first and second cooperating positioning structures have a corresponding shape, so that the walls of the positioning structures can at least partly support each other. Further it is thus clarified more clearly that the pot and carrier form an assembly of matching parts.

A stable position of the pot and carrier is important for transport, in particular in case of high and/or top-heavy realisation such as in combination with one or more high and/or heavy plants. The positioning structures assist with that. An important benefit is that further the cooperating positioning structures help prevent falling over of the plant pot during cultivation, logistics and/or in a (sales) display, e.g. due to movement of a support or a table, a gust of wind and/or clumsily placing a pot etc. In a traditional dense arrangement of plural pots, falling over of a single pot, in particular when provided with a plant, can lead to falling over of further adjacently placed pots, as in the well known "domino-effect". Apart from damage to the display as such this may also cause damage to and/or loss of plants and/or pots. Such damage is reduced or even prevented by the present assembly.

The carrier may have a substantially plane shape, apart from the positioning structures, e.g. a shelf, a cultivation table, a conveyor belt, a board, for long and/or short during placement. A carrier may also be formed as a so-called "tray", for carrying a number of pots.

In a particular embodiment the carrier has a space for at least partly receiving and supporting the pot therein, wherein the carrier space comprises the one or more protrusions as second positioning structures. Preferably, the carrier comprises more carrier spaces for receiving therein more pots. The carrier space(s) may at least partly fit closely about the respective pot(s) in an assembled state. This further provides a fortified assembly.

The one or more protrusions may be arranged in the carrier space, preferably one protrusion per space, e.g. at or near a centre of the space, wherein the carrier space has a top side and a depth with respect to that, and at least one of the protrusions extends up to the top side of the space or near that. Thus, the protrusion may be clearly visible and the chance that the pot is placed in the carrier in a wrong orientation is reduced or even prevented, in particular when the protrusion has a clearly visible non-circular shape. In particular when the pot has a hole and the respective protrusion is shaped such that they can only be inserted into each other only in substantially the one predetermined relative orientation of the pot and the carrier, placement of the pot in the carrier in a wrong orientation may be prevented or precluded. These effects are further increased when the protrusion(s) extend(s) above the top side of the carrier spaces.

When the top side of the pot, the top side of the protrusion and the entry opening of the hole are formed substantially equally non-circular it readily becomes apparent what the predetermined relative orientation is and it is prevented that erroneous placement of the pot on or in the carrier in a wrong orientation is attempted. This reduces (chances of) wrong placement, forcing, wear, damage of the objects and/or irritation of users.

The assembly may be formed such that the outer dimensions of the assembly correspond with whole fractions of standard sizes, e.g. for close filling with a number of assemblies of a Euro-pallet and/or a level of a so-called "Danish Cart", what are de facto standard transporting means for professional plant cultivation.

The assembly further simplifies determination of stocks, since the pots are placed regularly and positioning structures without pots are (more) clearly recognisable.

The assembly provided herewith may be manufactured cost-efficient. Further, costs of use of the provided assembly in transport and/or stock maintenance can be reduced, in particular since attention for and/or (time for) placement and/or (re-)orientation of the pot may be reduced. Thus an attractive display may be provided and/or maintained easily.

### BRIEF DESCRIPTION OF THE DRAWINGS

The above-described aspects will hereafter be elucidated further with reference to the drawings, wherein
Fig. 1 shows a first embodiment in perspective;
Figs. 2A-2B show the carrier of Fig. 1 in perspective from above respectively from below;
Figs. 3A-3C show a pot of Fig. 1 in top view, bottom view and, respectively, in cross section, as indicated with arrows A, B and, respectively, C.
Fig. 4 shows a cross section of the assembly of Fig. 1 according to line IV in Figs. 1 and 5;
Fig. 5 shows the first embodiment in top view;
Fig. 6 shows a positioning cam for manufacturing of a carrier for an embodiment of an assembly;
Fig. 7 shows an embodiment in top view.

### DETAILED DESCRIPTION OF EMBODIMENTS

Herein it holds that the drawings are schematic, not necessarily to scale and that details that are not required for understanding the present invention may have been omitted. Elements in different embodiments that are substantially identical and/or that perform a substantially identical function are indicated with the same reference symbols.

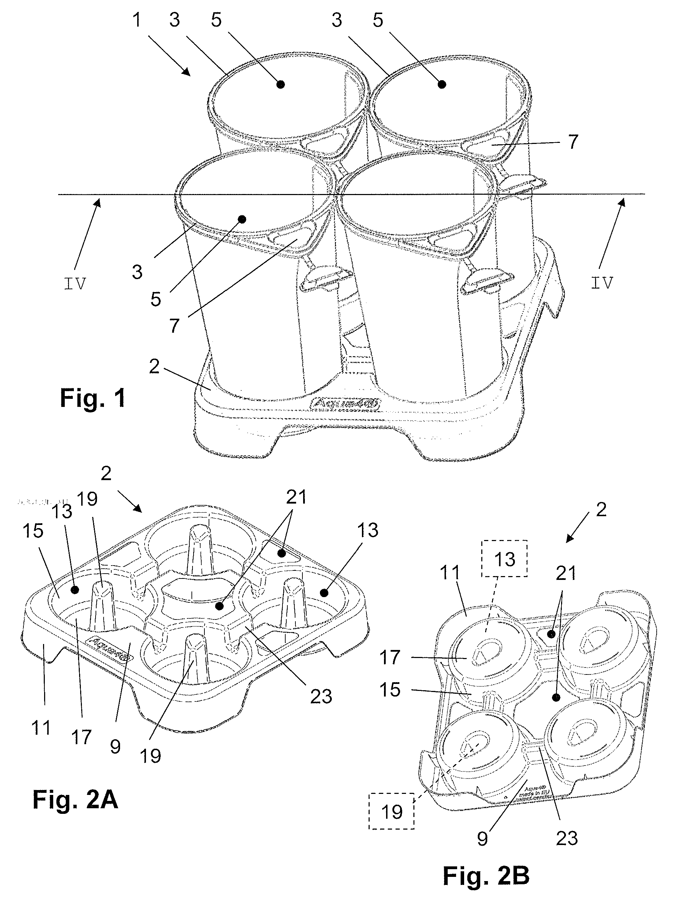

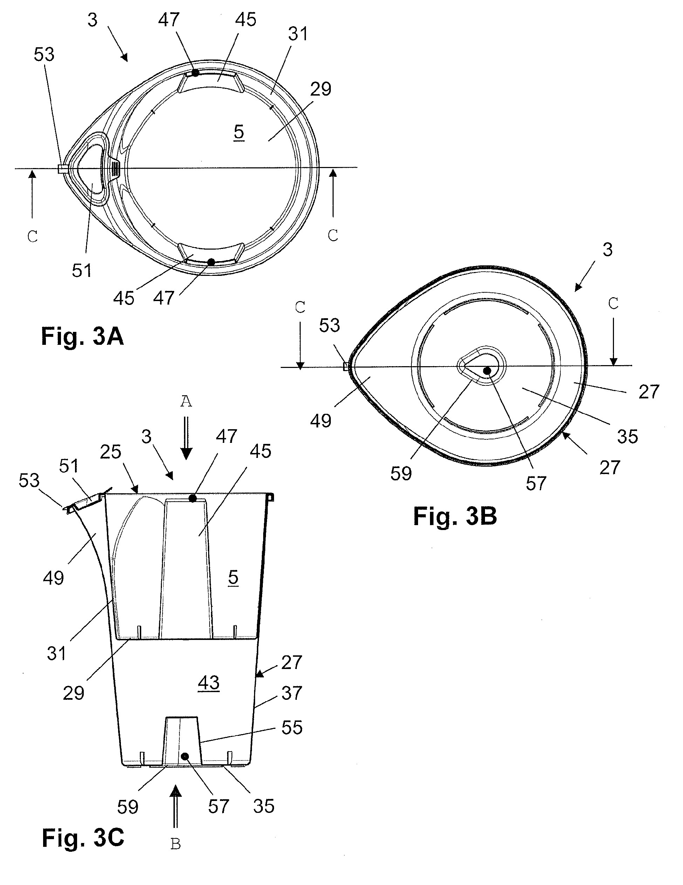

Figs. 1, 4 and 5 show an assembly 1 comprising a carrier 2 and a number of substantially identical pots 3 in it. The carrier 2 is shown in Fig. 2. Different views of the pot 3 are shown in Figs. 3A-3C. Each pot 3 has an interior space 5 for receiving therein a plant in soil or another growing medium (not shown). Each pot 3 further has a bottom side with a substantially round shape and a top side with a non-circular shape in top view, here a drop-shape with a spout 7 (see below).

The carrier 2, or tray, has a substantially rectangular, in particular square, shape for close filling of a rectangular surface and it extends in normal use as shown in Fig. 1 substantially horizontally. The carrier 2 has a top wall 9, side walls 11 and a number of recessed holes in the top wall 9 that form cavities or spaces 13 in the carrier 2 with walls 15 and bottoms 17. In each carrier space 13 near the centre of the bottom 17 a positioning structure 19 is provided in the form of a conic protrusion with a non-circular shape in top view, here a drop shape with a relatively acute side and a relatively obtuse side so that a somewhat elongated shape with a relatively large length and a relatively short width is provided. The protrusions 19 protrude substantially vertical upward from the bottom 17 so that they protrude above the top wall 9 and the top side of the cavity 13. In the shown carrier 2 the protrusions 19 are all directed in the same relative orientation of the carrier 2, namely with the acute side and length arranged substantially parallel to a (main) diagonal of the carrier 2. The constant top angle of the cone is chosen such that the width of the protrusion 19 near the bottom 17 is smaller than the length of the top side of the protrusion 19.

The carrier 2 may rest on a substantially plane subsurface on bottom edges of the side walls 11 and the under sides of the bottoms 17, so that the top wall 9 is supported by the (side) walls 11, 15, and the protrusions 19 extend vertically upward. The carrier is formed substantially hollow which saves material and weight (cf. Fig. 2B). In the top wall 9 of the carrier optional apertures 21 are provided to save further material, likewise, the side walls 11 are restricted mainly to parts near the corners of the carrier 2. Ribs 23 are further provided for stiffening the carrier. Due to the stability that is provided to the pots by the positioning structures (see below) the height of (the upstanding side walls 11 and 15 of) the carrier 2 may be lower than in traditional trays for plant pots, or even be left out altogether. Thus material and weight are saved.

The shown carrier for the assembly thus comprises a positioning structure comprising one or more protrusions, in particular one or more protrusions that extend substantially in a vertical direction in normal use with a non-circular shape in cross section, to be received at least partly into hole(s) of pots to define a single relative orientation of the pot and the carrier.

In particular referring to Figs. 3A-3C applies that the shown pots 3 each form a plant pot assembly, comprising an inner pot 25 and an outer pot 27. The inner pot 25 has a bottom 29 and a side wall 31 which surround the interior space 5 and a top edge 33. In the interior space 5 a plant with roots in soil or another medium may be received (not shown). The outer pot 27 has a bottom 35 and a side wall 37 which surround an inner space 41 so that underneath the bottom 29 of the inner pot 25 a liquid reservoir 43 is formed. Between the inner and outer pots 25, 27, further (two) channels 45 are formed through which wicks (not shown) can run to transport liquid from the reservoir 43 to the growing medium in the interior space 5 to moisten the medium and feed one or more plants therein. The inner pot 25 is substantially round in cross section. With the relatively acute portion the outer pot 27 forms a filling channel 49 that extends from the spout 7 along the inner pot 25 so that the reservoir 43 may be filled. The spout 7 is closable with a cap 51, which here is connected by a hinge 53 to the inner pot 25, that grips around the outer pot 31. Such a pot assembly enables to keep plants alive for prolonged duration without giving additional water. It is also possible to use the outer pot 27 only in traditional way, without inner pot 25, for keeping and/or growing plants.

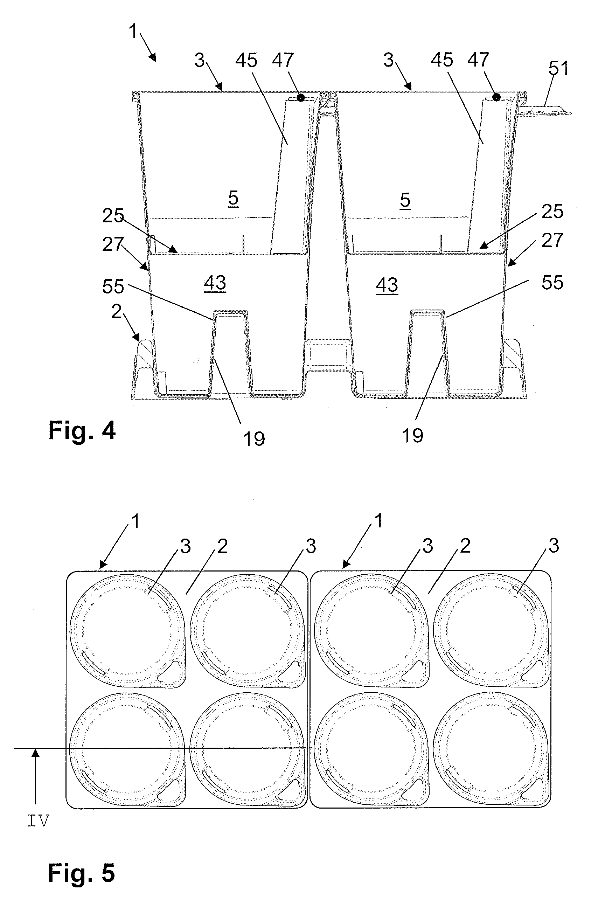

In the bottom 35 of the outer pot 27 a kick 55 is formed that provides a hole 57 with an entrance opening 59. The hole 57 has an internal shape which substantially corresponds with the external shape of the protrusion 19 of the carrier 2 (Fig. 4). The drop shape of the hole 57 and the drop shape of the top side of the outer pot 27 point in the shown embodiment substantially in the same direction. The bottom 35 and the walls 37 of the outer pot 27 on the one hand and (the walls 15 and the bottom 17 of) the spaces 13 on the other hand also have a corresponding shape. Thus the pot 3 may be placed fittingly into a space 13 of the carrier wherein the protrusion 19 is received fittingly into the hole 57 of the pot. The corresponding non-circular shapes of the protrusion 19 and the hole 57 define hereby a single relative orientation of the pot 3 relative to the carrier 2, despite the round outer shape of the under side of the outer pot 27. Since all protrusions 19 of the carrier 2 point in the same direction, an assembly of the carrier 2 with a number of pots 3, as shown in Figs. 1 and 5, has a pleasing uniform appearance, which may provide a consumer interest increasing effect to a display.

Due to the shape of the entrance opening 59 and the protrusion 19, the pot 3 cannot be placed on the protrusion 19 in an undesired orientation, but it can be so with a (small) rotation, wherein a lead-in is formed so that the placement of the pot 3 on the carrier 2 is easy and self-seeking.

It will be clear to the skilled person that a single plant pot without an inner pot and/or with a round or rectangular shape in top view may also be provided with the shown positioning structure, or another, without detracting from the functionality of the positioning structures and/or the pot as such.

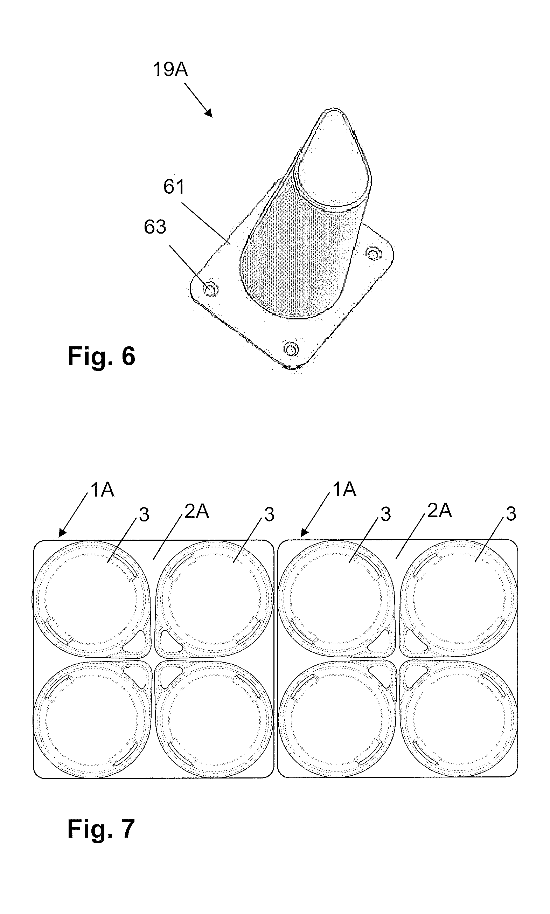

Fig. 6 shows an embodiment of a positioning structure 19A in the shape of a cam 19A with a substantially equal shape as the protrusions 19 of the carrier 2 described before. The cam 19A is provided with an optional flange 61 with through holes 63, for attachment of the cam 19A on a support, e.g. a transport cart, a shelf or another object, e.g. by means of screws etc. Thus also without carrier 2 a desired display may be achieved with the pots 3 described above. The cam 19A may be attached releasably to a carrier so that varying displays are possible with an otherwise usable carrier. The cam 19A may be (partly) hollow or massive and/or have other fastening portions than the shown flange 61, e.g. an internal screw thread for attachment from below, which may give a quieter appearance of a respective carrier provided with a number of cams 19A without pots 3. A flange 61 and/or a cam 19A that is attachable from below can provide a flat bottom for (further) stability of a pot 3 placed on the cam 19A.

An assembly 2A with a different arrangement of pots is shown in Fig. 7, which may be achieved with a carrier 2A that is substantially equal to the carrier 2 of the assembly discussed before, but wherein the positioning structures, relative to that carrier 2, are positioned in the same relative positions but oriented differently. Such a display provides a more dynamic impression than the display of Figs. 1 and 5, but also with the same clearly arranged and stable shape. By a suitable positioning and/or orientation possible delicate portions may be relatively protected. Here are for instance the hinges 53 arranged towards each other.

The invention is not restricted to the above described embodiments which can be varied in a number of ways within the scope of the claims.

For instance the assembly of a pot and a carrier can be used with single pots instead of pot assemblies. The pots may be larger, smaller and/or formed different, e.g. higher or lower. They may be of crockery, glass, plastic or another material. A carrier may (be arranged to) comprise more or less pots.

The assembly, in particular the carrier, may be provided with a decoration, covering and/or sleeve to give it an attractive appearance and/or be provided with one or more supports for flowers or plants, e.g. climbing plants.

Options and aspects of particular embodiments may be exchanged and combined within the scope of the claims, unless explicitly stated otherwise.

## Claims

1. An assembly (1), comprising a pot (3) with an interior space (5) for receiving therein a plant (7) in soil (9) or another growing medium, and a carrier (2),
wherein the pot and carrier are provided with cooperating first and second positioning structures (19, 57) to, in assembled state, define a single relative orientation of the pot and carrier
**characterised in that** the first positioning structure (57) comprises one or more holes with a non-circular shape, and the second positioning structure comprises one or more protrusions (19) to be received at least partly in the hole(s), and
**in that** the carrier (2) is provided with the one or more protrusions (19) and the one or more holes (57) are provided in a bottom of the pot (3) and such that the one or more holes (57) are at least substantially invisible when the pot is placed on a flat surface without use of the carrier.

2. Assembly (1) according to claim 1, wherein the carrier (2) comprises a plurality of protrusions as second positioning structures (19) to define in different positions on the carrier in assembled state with the pot a single relative orientation of the pot, or respective pots, and the carrier.

3. Assembly (1) according to claim 2, preferably comprising a plurality of, preferably substantially identical pots (3),
wherein, in assembled state of the carrier and the pots the first and second positioning structures (19, 57) define an identical relative orientation of the respective pot and carrier.

4. Assembly (1) according to any one of the preceding claims, wherein the pot has or the pots (3) have a top side and a bottom side, wherein the top side has a non-circular shape in top view and wherein the bottom side has a substantially round shape in cross section.

5. Assembly (1) according to any one of the preceding claims, wherein the pot is or pots (3) are provided with a plant arranged in the pot.

6. Assembly (1) according to any one of the preceding claims, wherein the first and second positioning structures (19, 57) extend substantially in a vertical direction in normal use.

7. The assembly according to claim 1, wherein the one or more holes (57) and/or one or more protrusions (19) are formed at least partly conical with upwards decreasing size.

8. The assembly according to claim 7, wherein the one or more holes (57) and one or more protrusions (19) are formed such that a protrusion can be inserted into a hole only in substantially the single defined relative orientation of the pot and the carrier, wherein preferably a protrusion has a non-circular shape in cross section and a corresponding hole has a matching non-circularly shaped entrance opening (59).

9. The assembly (1) according to any one of the preceding claims, wherein the first and second cooperating positioning structures (19, 57) have a corresponding shape.

10. The assembly (1) according to any one of the preceding claims, wherein the carrier (2) has a space (13) for receiving therein at least partly the pot and supporting the pot, preferably more spaces for receiving more pots, wherein the space(s) comprise(s) the one or more protrusions as second positioning structures (19).

11. The assembly (1) according to at least claim 10, wherein in the space(s) (13) one or more protrusions (19) are arranged, preferably a single protrusion per space, for instance in or near a middle of the space, wherein the space has a top side and a bottom (17) and a depth with respect to the top side, and at least one of the protrusions extends from the bottom up to the top side of the space or near that, preferably above that.

12. The assembly (1) according to at least claims 1, 4and 8, wherein the top side of the pot (3), a top side of the protrusion (19) and the entrance opening (59) of the hole (57) have substantially equal shape.

13. The assembly (1) according to any one of the preceding claims, wherein at least one protrusion (19A) is releasably attached to the carrier.

14. The assembly (1) according to any one of the preceding claims, wherein the pot (3) forms a plant pot assembly, comprising an inner pot (25) and an outer pot (27), wherein the inner pot (25) has a bottom (29) and a side wall (31), which surround the interior space (5) in which a plant with roots in soil or another medium may be received, and a top edge (33), wherein the outer pot (27) has a bottom (35) and a side wall (37) which surround an inner space (41) so that underneath the bottom (29) of the inner pot (25) a liquid reservoir (43) is formed and wherein between the inner and outer pots (25, 27), further channels (45) are formed through which wicks can run to transport liquid from the reservoir (43) to the growing medium in the interior space (5) to moisten the medium and feed one or more plants therein.

## Patentansprüche

1. Einrichtung (1), aufweisend einen Topf (3) mit einem Innenraum (5) zum darin Aufnehmen einer Pflanze (7) in Erde (9) oder einem anderen Wachstumsmedium, und einen Träger (2), wobei der Topf und der Träger mit einer ersten und einer zweiten Positionierungsstruktur (19, 57), die kooperieren, versehen ist, um, in einem Zusammenbauzustand, eine einzige relative Ausrichtung des Topfs und des Trägers zu definieren, **dadurch gekennzeichnet, dass** die erste Positionierungsstruktur (57) ein oder mehr Löcher mit nicht-kreisförmiger Gestalt aufweist und die zweite Positionierungsstruktur einen oder mehrere Vorsprünge (19) aufweist, um zumindest teilweise in dem(den) Löcher(n) aufgenommen zu sein, und
dass der Träger (2) mit dem einen oder den mehreren Vorsprüngen (19) versehen ist und das eine oder die mehreren Löcher (57) bereitgestellt sind in einem Boden des Topfs (3) und derart, dass das eine oder die mehreren Löcher (57) zumindest im Wesentlichen nicht sichtbar sind, wenn der Topf, ohne Verwendung des Trägers, auf einer flachen Fläche platziert ist.

2. Einrichtung (1) gemäß Anspruch 1, wobei der Träger (2) eine Mehrzahl von Vorsprüngen als zweite Positionierungsstrukturen (19) aufweist, um in unterschiedlichen Positionen an dem Träger im Zusammenbauzustand mit dem Topf eine einzige relative Ausrichtung des Topfs, oder jeweiliger Töpfe, und des Trägers zu definieren.

3. Einrichtung (1) gemäß Anspruch 2, bevorzugt aufweisend eine Mehrzahl von, bevorzugt im Wesentlichen identischen Töpfen (3),
wobei, im Zusammenbauzustand des Trägers und der Töpfe, die erste und die zweite Positionierungsstruktur (19, 57) eine identische relative Ausrichtung des jeweiligen Topfs und Trägers definieren.

4. Einrichtung (1) gemäß irgendeinem der vorhergehenden Ansprüche, wobei der Topf oder die Töpfe (3) eine obere Seite und eine untere Seite hat/haben, wobei die obere Seite in der Draufsicht eine nicht-kreisförmige Gestalt hat und wobei die untere Seite im Querschnitt eine im Wesentlichen runde Gestalt hat.

5. Einrichtung (1) gemäß irgendeinem der vorhergehenden Ansprüche, wobei der Topf oder die Töpfe (3) mit einer Pflanze ausgestattet sind, die in dem Topf angeordnet ist.

6. Einrichtung (1) gemäß irgendeinem der vorhergehenden Ansprüche, wobei die erste und die zweite Positionierungsstruktur (19, 57) sich im normalen Gebrauch im Wesentlichen in einer vertikalen Richtung erstrecken.

7. Einrichtung gemäß Anspruch 1, wobei das eine oder die mehreren Löcher (57) und/oder der eine oder die mehreren Vorsprünge (19) zumindest teilweise konisch mit einer nach oben abnehmenden Größe geformt sind.

8. Einrichtung gemäß Anspruch 7, wobei das eine oder die mehreren Löcher (57) und der eine oder die mehreren Vorsprünge (19) derart ausgebildet sind, dass ein Vorsprung nur in im Wesentlichen der einzigen definierten relativen Ausrichtung des Topfs und des Trägers in ein Loch eingesetzt werden kann, wobei bevorzugt ein Vorsprung im Querschnitt eine nicht kreisförmige Gestalt hat und ein korrespondierendes Loch eine passende nicht kreisförmig gestaltete Eintrittsöffnung (59) hat.

9. Einrichtung (1) gemäß irgendeinem der vorhergehenden Ansprüche, wobei die erste und die zweite Positionierungsstruktur (19, 57), die kooperieren, eine korrespondierende Gestalt haben.

10. Einrichtung (1) gemäß irgendeinem der vorhergehenden Ansprüche, wobei der Träger (2) einen Raum (3) hat, um darin den Topf zumindest teilweise auszunehmen und den Topf zu halten, bevorzugt mehrere Räume zum Aufnehmen mehrerer Töpfe, wobei der(die) Raum(Räume) aufweist(aufweisen) den einen oder die mehreren Vorsprünge als zweite Positionierungsstrukturen (19).

11. Einrichtung (1) gemäß wenigstens Anspruch 10, wobei in dem(den) Raum(Räumen) (13) ein oder mehrere Vorsprünge (19) angeordnet sind, bevorzugt ein einziger Vorsprung pro Raum, zum Beispiel in oder nahe einer Mitte des Raums, wobei der Raum eine obere Seite und einen Boden (17) und eine Tiefe bezüglich der oberen Seite hat, wobei sich wenigstens einer der Vorsprünge von dem Boden aus nach oben zu der oberen Seite des Raums oder nahe zu dieser, bevorzugt über diese, erstreckt.

12. Einrichtung (1) gemäß zumindest den Ansprüchen 1, 4 und 8, wobei die obere Seite des Topfs (3), eine obere Seite des Vorsprungs (19) und die Eintrittsöffnung (59) des Lochs (57) eine im Wesentlichen gleiche Gestalt haben.

13. Einrichtung (1) gemäß irgendeinem der vorhergehenden Ansprüche, wobei zumindest ein Vorsprung (19A) lösbar an dem Träger angebracht ist.

14. Einrichtung (1) gemäß irgendeinem der vorhergehenden Ansprüche, wobei der Topf (3) eine Pflanzentopfeinrichtung bildet, aufweisend einen inneren Topf (25) und einen äußeren Topf (27), wobei der innere Topf (25) einen Boden (29) und eine Seitenwand (31) hat, welche den Innenraum (5) umgeben, in welchem eine Pflanze mit Wurzeln in Erde oder einem anderen Medium aufgenommen werden kann, und einen oberen Rand (33), wobei der äußere Topf (27) einen Boden (35) und eine Seitenwand (37) hat, welche einen Innenraum (41) umgeben, sodass unterhalb des Bodens (29) des inneren Topfs (25) ein Flüssigkeitsreservoir (43) ausgebildet ist, und wobei zwischen dem inneren und dem äußeren Topf (25, 27) weitere Kanäle (45) ausgebildet sind, durch welche Dochte verlaufen können, um Flüssigkeit von dem Reservoir (43) zu dem Wachstumsmedium in dem Innenraum (5) zu transportieren, um das Medium zu befeuchten und die eine oder die mehreren Pflanzen darin zu versorgen.

## Revendications

1. Ensemble (1) comprenant un pot (3) avec un espace intérieur (5) pour y recevoir une plante (7) en terre (9) ou dans un autre milieu de culture, et un support (2),
dans lequel le pot et le support sont prévus avec des première et seconde structures de positionnement (19, 57) coopérantes pour, à l'état assemblé, définir une orientation unique relative du pot et du support,
**caractérisé en ce que** la première structure de positionnement (57) comprend un ou plusieurs trous avec une forme non circulaire, et la seconde structure de positionnement comprend une ou plusieurs saillies (19) destinées à être reçues au moins partiellement dans le (les) trou(s), et
**en ce que** le support (2) est prévu avec les une ou plusieurs saillies (19) et les un ou plusieurs trous (57) sont prévus dans un fond du pot (3) et de sorte que les un ou plusieurs trous (57) sont au moins sensiblement invisibles lorsque le pot est placé sur une surface plate sans utiliser le support.

2. Ensemble (1) selon la revendication 1, dans lequel le support (2) comprend une pluralité de saillies en tant que secondes structures de positionnement (19) pour définir, dans différentes positions sur le support, à l'état assemblé avec le pot, une orientation unique relative du pot ou des pots respectifs et du support.

3. Ensemble (1) selon la revendication 2, comprenant de préférence une pluralité de pots (3) de préférence sensiblement identiques,
dans lequel, à l'état assemblé du support et des pots, les première et seconde structures de positionnement (19, 57) définissent une orientation relative identique du pot respectif et du support.

4. Ensemble (1) selon l'une quelconque des revendications précédentes, dans lequel le pot a ou les pots (3) ont un côté supérieur et un côté inférieur, dans lequel le côté supérieur a une forme non circulaire sur une vue de dessus et dans lequel le côté inférieur a une forme sensiblement ronde en coupe.

5. Ensemble (1) selon l'une quelconque des revendications précédentes, dans lequel le pot est ou les pots (3) sont prévu(s) avec une plante agencée dans le pot.

6. Ensemble (1) selon l'une quelconque des revendications précédentes, dans lequel les première et seconde structures de positionnement (19, 57) s'étendent sensiblement dans une direction verticale, à l'usage normal.

7. Ensemble selon la revendication 1, dans lequel les un ou plusieurs trous (57) et/ou les une ou plusieurs saillies (19) sont formés de manière au moins partiellement conique avec une taille décroissante vers le haut.

8. Ensemble selon la revendication 7, dans lequel les un ou plusieurs trous (57) et les une ou plusieurs saillies (19) sont formés de sorte qu'une saillie peut être insérée dans un trou uniquement dans l'orientation sensiblement unique définie relative du pot et du support, dans lequel de préférence une saillie a une forme non circulaire en coupe et un trou correspondant a une ouverture d'entrée (59) de forme non circulaire correspondante.

9. Ensemble (1) selon l'une quelconque des revendications précédentes, dans lequel les première et seconde structures de positionnement coopérantes (19, 57) ont une forme correspondante.

10. Ensemble (1) selon l'une quelconque des revendications précédentes, dans lequel le support (2) a un espace (13) pour y recevoir au moins partiellement le pot et supporter le pot, de préférence plusieurs espaces pour recevoir plus de pots, dans lequel l'espace (les espaces) comprend (comprennent) les une ou plusieurs saillies en tant que secondes structures de positionnement (19).

11. Ensemble (1) selon au moins la revendication 10, dans lequel, dans l'espace (les espaces) (13), on agence une ou plusieurs saillies (19), de préférence une seule saillie par espace, par exemple dans ou à proximité d'une partie centrale de l'espace, dans lequel l'espace a un côté supérieur et un fond (17) et une profondeur par rapport au côté supérieur, et au moins l'une des saillies s'étend à partir du fond jusqu'au côté supérieur de l'espace ou à proximité de ce dernier, de préférence au-dessus de ce dernier.

12. Ensemble (1) selon au moins les revendications 1, 4 et 8, dans lequel le côté supérieur du pot (3), un côté supérieur de la saillie (19) et l'ouverture d'entrée (59) du trou (57) ont une forme sensiblement égale.

13. Ensemble (1) selon l'une quelconque des revendications précédentes, dans lequel au moins une saillie (19A) est fixée de manière amovible sur le support.

14. Ensemble (1) selon l'une quelconque des revendications précédentes, dans lequel le pot (3) forme un ensemble de pot de plante, comprenant un pot interne (25) et un pot externe (27), dans lequel le pot interne (25) a un fond (29) et une paroi latérale (31) qui entourent l'espace intérieur (5) dans lequel une plante avec des racines en terre ou dans un autre milieu peut être reçue, et un bord supérieur (33), dans lequel le pot externe (27) a un fond (35) et une paroi latérale (37) qui entourent un espace interne (41) de sorte que sous le fond (29) du pot interne (25), un réservoir de liquide (43) est formé et dans lequel entre les pots interne et externe (25, 27), d'autres canaux (45) sont formés, à travers lesquels des mèches peuvent s'étendre pour transporter le liquide du réservoir (43) jusqu'au milieu de culture dans l'espace intérieur (5) pour humidifier le milieu et alimenter une ou plusieurs plantes à l'intérieur de ce dernier.
